## Europäisches Patentamt
## European Patent Office
## Office européen des brevets

(19)

(11) Veröffentlichungsnummer: **0 044 106**
**B1**

(12) # EUROPÄISCHE PATENTSCHRIFT

(45) Veröffentlichungstag der Patentschrift:
**19.09.84**

(51) Int. Cl.³: **B 01 D 46/24**

(21) Anmeldenummer: **81200745.8**

(22) Anmeldetag: **01.07.81**

(54) **Filteraggregat.**

(30) Priorität: **16.07.80 CH 5454/80**

(43) Veröffentlichungstag der Anmeldung:
**20.01.82 Patentblatt 82/3**

(45) Bekanntmachung des Hinweises auf die Patenterteilung:
**19.09.84 Patentblatt 84/38**

(84) Benannte Vertragsstaaten:
**AT BE CH DE FR GB IT LI LU NL SE**

(56) Entgegenhaltungen:
**EP - A - 0 011 995**
**CH - A - 591 054**
**DE - B - 2 025 883**
**GB - A - 16 392**

(73) Patentinhaber: **Ferri, Hans, Müllerwis 27,
CH-8606 Greifensee (CH)**

(72) Erfinder: **Ferri, Hans, Müllerwis 27, CH-8606 Greifensee
(CH)**

(74) Vertreter: **Ritscher, Thomas, Dr. et al, RITSCHER &
SEIFERT Auf der Mauer 4, CH-8001 Zürich (CH)**

**Beschreibung**

Die Erfindung betrifft ein Filteraggregat für die Entfernung bzw. Rückgewinnung von feinteiligen, insbesondere faserigen Feststoffen aus einem Gas- bzw. Luftstrom.

Für die Reinigung oder Abfallrückführung von bzw. aus großen Gas- bzw. Luftmengen werden Filter benötigt, z. B. in der Textiltechnik, der Asbest- oder Armierungsfasertechnik und anderen Verarbeitungsmethoden, bei denen gesundheitsschädliche (z. B. Byssinosis verursachende) schwebfähige Feststoffteilchen entstehen.

Geräte für diesen Zweck sind seit langem bekannt, z. B. aus der GB-A-16 392, der US-A-2 722 997 und der DE-B-2 751 789. Gemeinsam ist diesen bekannten Geräten ein Abscheider mit einer einseitig offenen Filtertrommel, die einen annähernd zylindrischen stationären Filtermantel aus gasdurchlässigem, aber im Gasstrom mitgeführten feinteiligen Feststoffe zurückhaltendem Material, z. B. aus Gewebe oder Faservlies, besitzt. Die stationäre Filtertrommel wird durch ihr offenes Ende mit dem zu filtrierenden Gasstrom beaufschlagt, der von einem vorgeschalteten Druckgebläse oder einem nachgeschalteten Sauggebläse bewegt wird.

Die an der Innenseite des Filtermantels abgeschiedenen Feststoffe müssen entfernt werden; dazu ist aus der erstgenannten GB-A-16 392 (angemeldet 1911) seit langem der Vorschlag bekannt, Absaugdüsen zu verwenden, welche die am Filtermantel abgeschiedenen Feststoffe absaugen sollen. Dazu besitzt die in der GB-A-16 392 beschriebene Anlage eine annähernd koaxiale umlaufende Hohlwelle, mit welcher die Absaugdüsen in radialer und axialer Richtung bewegungsstarr verbunden sind. Mit einem gesonderten Sauggebläse werden die Feststoffe durch die Düsen und die Hohlwelle abgesaugt. Um die gesamte Innenfläche des Filtermantels abzusaugen, werden mehrere schlitzförmige Absaugdüsen nebeneinander verwendet, von denen sich jede in axialer Richtung über einen Teilbereich der Innenfläche erstreckt, oder es wird eine einzige Absaugdüse verwendet, deren Saugschlitz sich axial über die gesamte axiale Länge der Innenfläche erstreckt. In beiden Fällen durchlaufen die Saugdüsen lineare kreisförmige Bahnen. Eine ausreichend gleichmäßige Saugwirkung auf die Innenseite ist dabei mit praktikablem konstruktivem Aufwand bisher nicht zu erzielen, insbesondere wenn die Filtertrommel stationär ist.

Oszillierend in axialer Richtung bewegliche und im Innern der Filtertrommel angebrachte Absaugdüsen sind zwar an sich bekannt, z. B. aus der CH-PS 591 054, aber nur für umlaufende Filtertrommeln mit in radialer Richtung stationären Absaugdüsen, die für die Oszillierbewegung in axialer Richtung einen gesonderten Antrieb benötigen.

Um die Nachteile des innenseitigen Absaugens einer stationären Filtertrommel gemäß GB-A-16 392 zu vermeiden, ist es aus der US-A-2 722 997 und der DE-B-2 751 789 bekannt, die innenseitigen Absaugdüsen durch außenseitige oszillierende Blasringe zu ersetzen; dazu wird ein an der Außenseite des Filtermantels in axialer Richtung mit einem Motor oszillierend bewegtes ringförmiges Rohr mit Blasöffnungen verwendet, das die an der Innenseite des Filtermantels abgelagerten Feststoffe entgegen dem Hauptstrom mit Druckluft abbläst; die so abgeblasenen Feststoffe werden je nachdem, ob die Filtertrommelachse vertikal (US-A-2 722 997) oder horizontal (DE-B-2 751 789) ist, durch gesonderte Absaugvorrichtungen im Innern der Trommel oder nahe dem Trommelboden abgezogen.

Das Abblasen von außen hat jedoch betriebsmäßige, insbesondere strömungsdynamische und energetische, sowie konstruktive Nachteile gegenüber dem innenseitigen Absaugen.

Aufgabe der Erfindung ist ein Filteraggregat, das die Vorteile des innenseitigen Absaugens einer stationären Filtertrommel ohne die damit gemäß Stand der Technik verbundenen Nachteile einer ungleichmäßigen Absaugwirkung und mit einer vergleichsweise einfachen, betriebssicheren Konstruktion gestattet.

Diese Aufgabe wird erfindungsgemäß gelöst durch ein Filteraggregat mit den in Oberbegriff und Kennzeichen von Patentanspruch 1 angegebenen Merkmalen.

Die erfindungsgemäß zur oszillierenden Bewegung der Absaugdüsen bzw. des diese tragenden Schlittens verwendete Einrichtung benötigt keinen eigenen motorischen Antrieb, da die Umlaufbewegung der angetriebenen Hohlachse in konstruktiv überraschend einfacher Weise in eine axial oszillierende Bewegung des Schlittens umsetzbar ist, vorzugsweise mit einer Kreuzspindel, deren eines Ende mit einer stationären Abrollfläche gekoppelt ist.

Ein weiterer Vorteil des erfindungsgemäßen Filteraggregates besteht darin, daß der Abscheider in sehr einfacher und wirkungsvoller Weise zweistufig ausgebildet, d. h. mit einem integrierten Vorabscheider versehen werden kann.

Integrierte Vorabscheider für zweistufige Gasfilter mit zylindrischer Filterfläche sind an sich bekannt. So ist z. B. das in der oben bereits erwähnten CH-PS 591 054 beschriebene Filteraggregat zweistufig, indem der umlaufende Filtermantel des Hauptabscheiders einen koaxial im Innern angeordneten Zyklon mit zylindrischer Vorfilterwand als Vorabscheider umfaßt. Dieses bekannte Aggregat ist jedoch bezüglich Aufbau und Betrieb kompliziert bzw. kostspielig, weil der Filtermantel des Hauptabscheiders drehbar ausgebildet und angetrieben sein muß bzw. weil überdies die Absaugdüsen in dem verhältnismäßig kleinen ringförmigen Raum zwischen dem Vorabscheider und dem Hauptabscheider angeordnet werden müssen, weil eine vergleichsweise komplizierte Steuerung für die Oszillationsbewegung der Saugdüsen benötigt wird und der Vorabscheider energieintensiv ist.

Demgegenüber bietet die Erfindung gemäß der bevorzugten Ausführungsform mit den Merkmalen von Patentanspruch 2 ein Filteraggregat mit integriertem Vor- und Hauptabscheider, das bezüglich Filterwirkung und Gesamtraumausnützung dem in der CH-PS 591 054 beschriebenen Aggregat mindestens gleichwertig ist, dabei aber konstruktiv erheblich einfacher und weniger kostspielig.

Diese bevorzugte Ausführungsform des erfindungsgemäßen Filteraggregates hat als Vorabscheider eine kreisförmige und rotierende Siebscheibe und eine stationäre Absaugeinrichtung, welche auf die wirksame Oberfläche der Siebscheibe des Vorabscheiders einwirkt, d. h. den Arbeitsradius der strömungsseitig vorderen Seite der Siebscheibe im wesentlichen überdeckt. Dabei überdeckt die Siebscheibe des Vorabscheiders den Einströmquerschnitt des Hauptabscheiders, d. h. die strömungsseitig vordere Kreisfläche der als Hauptabscheider dienenden Filtertrommel; die Siebscheibe ist bewegungsstarr mit der axial in der Filtertrommel angeordneten umlaufenden Hohlwelle verbunden, die, wie oben erwähnt, mindestens einen in axialer Richtung auf der Hohlwelle beweglichen, in radialer Richtung aber drehstarr mit dieser verbundenen Schlitten trägt, der seinerseits mindestens eine Absaugdüse des Hauptabscheiders trägt und mit der Hohlwelle umläuft. Durch die umlaufende Hohlwelle wird also nicht nur über die drehstarr mit ihr verbundene Umsetzereinrichtung die axiale Oszillation der Absaugdüsen, sondern auch der Antrieb der Siebscheibe des Vorabscheiders bewirkt.

Die Erfindung wird anhand der Zeichnungen in bevorzugten Ausführungsformen erläutert. Es zeigt

Fig. 1 die halbschematische Schnittdarstellung eines erfindungsgemäßen Filteraggregates mit Vorabscheider,

Fig. 2 die Draufsicht auf den Vorabscheider des in Fig. 1 dargestellten Filteraggregates,

Fig. 3 das Fließbild für eine Betriebsweise des in Fig. 1 dargestellten Filteraggregates und

Fig. 4 die etwas vereinfachte perspektivische und teilweise geschnittene Vorderansicht eines erfindungsgemäßen Filteraggregates ohne Vorabscheider.

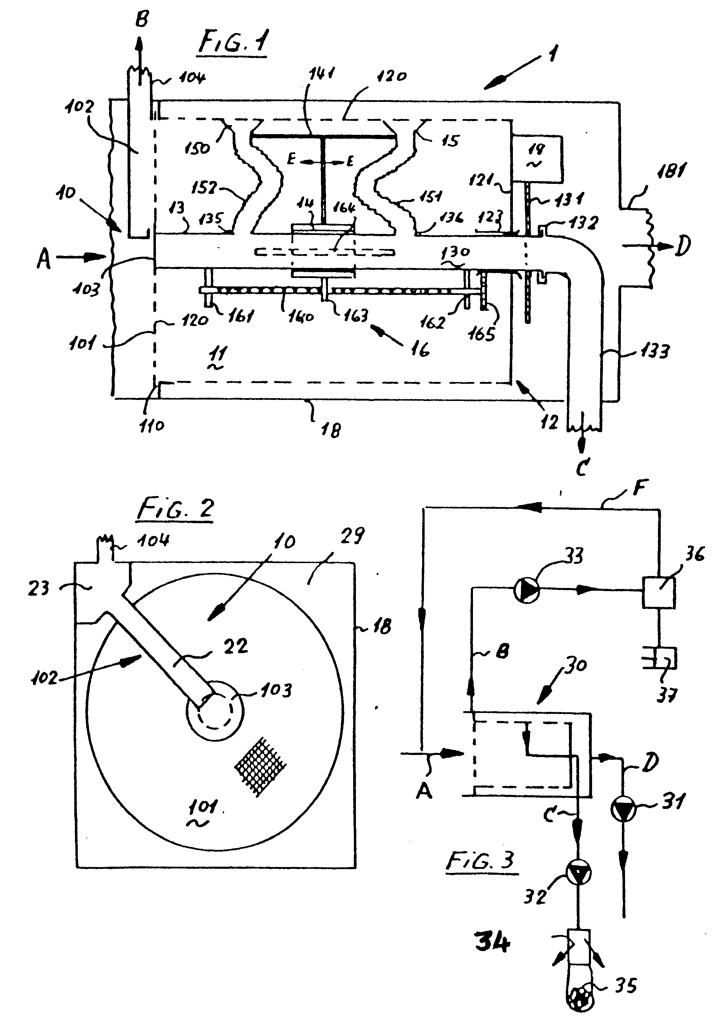

Das in Fig. 1 halbschematisch im Axialschnitt dargestellte Filteraggregat 1 ist eingebaut in eine teilweise abgebrochen dargestellte Kammer 18 an sich üblicher Art, z. B. ein Blechgehäuse oder eine Kammer aus einem anderen, praktisch undurchlässigen Material.

Der zu filternde Luftstrom A gelangt zunächst an den Vorabscheider 10. Dieser besitzt als Hauptteile eine rotierende Siebscheibe 101, welche die strömungsseitig vordere und praktisch offene Kreisfläche 120 des Abscheiders 11 bzw. dessen Einströmungsfläche abdeckt. Damit ein teilweises Umgehen des Vorabscheiders 10 an der Gleitstelle 110 zwischen der Siebscheibe 101 und dem Abscheider 11 vermieden wird, kann z. B. eine (nicht dargestellte) Gleitdichtung in Form eines Kreisringes aus Gleitmaterial verwendet werden, der entweder mit der Siebplatte 101 verbunden ist und an der Vorderkante der Filtertrommel 12 gleitet, oder umgekehrt.

Die Siebscheibe 101 besteht mindestens auf einem Teil und vorzugsweise auf dem überwiegenden Teil ihrer Kreisfläche aus fein perforiertem Material, z. B. einem engmaschigen Sieb aus organisch-polymeren oder metallischen Monofilamenten. Vorzugsweise ist das Sieb relativ dünn, z. B. weniger als 3 mm, vorzugsweise weniger als 1 mm, dick und hat eine lichte Maschenweite von beispielsweise etwa 100 bis 250 μm. Im allgemeinen hat die Siebscheibe einen (nicht dargestellten) Rahmen, in dem das Sieb unter Flachspannung gehalten und mit dem es in drehender Bewegung gehalten werden kann. Beispielsweise besteht der Rahmen aus einem kreisförmigen Außenring (nicht dargestellt), einer zentralen Führungsscheibe 103 und mehreren (nicht dargestellten) radialen Speichen zur Verbindung des Rahmenaußenringes mit der Führungsscheibe 103. Vorzugsweise ist die Siebscheibe 101 praktisch eben; sie kann aber auch konisch oder kreisförmig gewölbt sein, sofern die noch zu erläuternde Absaugeinrichtung 102 dieser Wölbung gut angepaßt werden kann.

Die vom Luftstrom A auf der strömungsmäßig vorderen Seite der z. B. mit 3 bis 4 U/min rotierenden Siebscheibe 101 abgelagerten Fasern werden mit der stationären Absaugeinrichtung 102 laufend über die Leitung 104 in Richtung des Pfeiles B abgesaugt.

Die Absaugeinrichtung 102 überdeckt im wesentlichen den Arbeitsradius der Siebscheibe 101, d. h, den radialen Teil der rotierenden Siebscheibe 101, der mit Sieböffnungen versehen ist. Vorzugsweise ist der Arbeitsradius der Scheibe 101 etwa gleich groß wie die radiale Breite des in Strömungsrichtung anschließenden Teils des Strömungsquerschnittes des Hauptabscheiders 11.

Die Absaugeinrichtung 102 ist beispielsweise als lineare Schlitzdüse ausgebildet, deren Düsenspalt nahe der Siebfläche der Siebscheibe 101 liegt. Der Abstand zwischen dem Düsenspalt und der Siebfläche ist vorzugsweise über dem Arbeitsradius der Siebplatte 101 praktisch gleich und beträgt z. B. 5 bis 30 mm. Es versteht sich, daß der von der Absaugeinrichtung auf die Siebscheibe 101 bzw. die darauf abgeschiedenen Fasern einwirkende Sog stärker sein muß, als die Sogwirkung des Hauptabscheiders. Ein kontinuierlicher Sog der Vorrichtung 102 wird bevorzugt, doch kann auch mit pulsierendem Sog gearbeitet werden.

Beispielsweise hat der Gas- bzw. Luftstrom B eine mindestens etwa zweimal größere Geschwindigkeit, als der Luftstrom D; eine Strömungsgeschwindigkeit B von etwa 25 m/sec und eine Strömungsgeschwindigkeit D von etwa 8 m/sec ist als Beispiel zu nennen.

Die Siebscheibe 101 ist, z. B. mittels der Führungsscheibe 103, drehstarr mit der Hohlwelle 13 verbunden, beispielsweise durch endseitiges Verflanschen. Die Hohlwelle 13 erstreckt sich axial in und vorzugsweise durch die Filtertrommel 12 des Hauptabscheiders 11. Im allgemeinen liegt die Hohlwelle 13 nicht nur axial zur, sondern koaxial mit der Filtertrommel 12.

Die Hohlwelle 13 ist an ihrem strömungsseitig vorderen Ende (z. B. bei 103) geschlossen und hat eine Doppelfunktion: sie dient sowohl zur Drehung der Siebscheibe 101 des Vorabscheiders 10 als auch zur Führung, Bewegung und Betätigung der Saugdüsen 15, 150, welche auf die Innenseite des Filtermantels 120 des Hauptabscheiders 11 die dort abgelagerten Feststoffe entfernen. Hierzu ist die Hohlwelle 13 (in nur teilweise bei 123 dargestellter Weise) drehbar gelagert und wird von einem Antrieb gleichsinnig oder pendelnd rotierend bewegt, z. B. mit dem Motor 19, der an der stationären Endwand 121 der Filtertrommel 12 befestigt ist und beispielsweise auf ein mit der Hohlwelle 13 verbundenes Antriebsrad 131 einwirkt, das als Zahnrad, Reibrad oder Keilriemenrad ausgebildet ist und mit dem (nicht dargestellten) meist entsprechend untersetzten Antriebsrad des Motors 19 verbunden ist.

An ihrem strömungsseitig hinteren Ende ist die Hohlwelle 13 über einen Drehflansch 132 mit der stationären Absaugleitung 133 verbunden, die ihrerseits mit einem üblichen Absauger 32 (Fig. 3) verbunden ist und zu einem an sich bekannten Sackfilter 34 mit nachgeschaltetem Staubsack 35 führt.

Auf der Hohlwelle 13 ist mindestens ein Schlitten 14 angeordnet, der mindestens eine und vorzugsweise zwei oder mehrere Düsen 15, 150 mit der Hohlwelle radial umlaufend und außerdem in axialer Richtung (entsprechend dem Doppelpfeil E-E) oszillierend, d. h. hin- und hergehend, über die Innenwand des Filtermantels 120 führt.

Beispielsweise sind die Düsen 15, 150 an einem Gestänge 141 befestigt, das seinerseits mit dem Schlitten 14 verbunden ist, und mit flexiblen Schäuchen 151, 152 über entsprechende Öffnungsstutzen 135, 136 mit dem Hohlraum 130 der Welle 13 verbunden.

Der Schlitten 14 ist rotationsstarr aber axial verschiebbar mit der Hohlwelle 13 verbunden, etwa indem er an einer schwertartigen Führung oder Schiene 164 (in Fig. 1 durchbrochen gezeichnet) radial praktisch starr aber axial beweglich anliegt. Die Schiene 164 ist starr mit der Hohlwelle 13 verbunden, z. B. an dieser angeschweißt oder angeflanscht, und der Schlitten 14 ist mit einer (nicht dargestellten) Führungsnut oder mit (nicht dargestellten) Führungsrollen verbunden. Die Hohlwelle 13 kann für jeden Schlitten 14 auch mehrere, z. B. paarige bzw. peripher um die Hohlwelle 13 verteilte Schienen 164 besitzen.

Mit dem Schlitten 14 starr verbunden ist eine Führung 163, die mit einem (nicht dargestellten) Stift bzw. einer Nut in die Führungsrille bzw. Führungskerbe einer Führungsspindel, vorzugsweise einer Kreuzspindel 160, eingreift. Die Kreuzspindel 160 ist z. B. in zwei Lagerböcken 161, 162 drehbar geführt, die an der Hohlwelle 13 befestigt sind. Die Kreuzspindel 160 kann, z. B. durch ein endseitiges Rad 165, das an einer stationären Fläche der Stirnwand 121, etwa an einem Flansch, Lager oder dergleichen und z. B. an dem Lagerkragen 123 abrollt, in Drehbewegung versetzt werden, wodurch der Schlitten 14 und damit die mindestens eine Düse 15 in axialer Richtung E-E verschoben wird.

Eine Kreuzspindel 160 wird zur Steuerung der Axialverschiebung E-E bevorzugt, weil dadurch bei fortlaufend gleichsinniger Bewegung der Hohlwelle 13 eine oszillierende Axialbewegung des Schlittens 14 erzeugt werden kann. Es sind aber auch andere mechanische Mittel, beispielsweise Umkehrgetriebe, bekannt, die sich zur Axialverschiebung des Schlittens 14 eignen. Ferner kann bei periodisch umkehrendem Drehsinn der Hohlwelle 13 auch eine gewöhnliche, also nicht gekreuzte Spindel oder dergleichen verwendet werden.

Der zylindrische Filtermantel 120 des Hauptabscheiders kann in an sich bekannter Weise aus Filtermattenmaterial, Nadelfilz oder dergleichen technisch erhältlichem Filtermaterial für die Gas/Feststoff-Trennung gebildet werden. Allgemein soll der Filtermantel 120 Feststoffteilchen, z. B. Fasern oder Staub, zurückhalten können, deren Teilchenabmessungen im besonders lungenschädlichen Bereich (z. B. 7—15 μm) oder darunter (z. B. bis 0,1 μm) liegen.

Die Bemessung der filtrierend durchlässigen Fläche des Filtermantels 120, der Gas- bzw. Luftdurchsatzmenge, der Strömungsgeschwindigkeit und dergleichen Parameter für den Hauptabscheider 11 bzw. für den Filtermantel 120 liegt im Bereich des fachmännischen Wissens und wird daher nicht weiter erläutert. Zur allgemeinen Orientierung mag dienen, daß ein erfindungsgemäßes Filteraggregat ohne besondere Probleme auf Durchsatzmengen im technisch wichtigen Bereich von beispielsweise 10 000 bis 200 000 m³/Std. ausgelegt werden kann, um beispielsweise in der Textilverarbeitung auch die sehr strengen, nach neueren Normvorschlägen (OSHA-Vorschriften) angestrebten Sollwerte von ≤0,2 mg Schwebstoff/m³ der filtrierten Luft mit wirtschaftlichem Anlage- und Betriebsaufwand zu erreichen.

Auch die (nicht dargestellte) Halterung des Filtermantels 120 bzw. der Wand 121 im Inneren der Kammerwand 18 ist eine (fachmännische Maßnahme, die z. B. mit außenliegenden peripheren Ringen und/oder axialen Streben in vergleichsweise einfacher Weise erzielt werden kann.

Wie bereits im Zusammenhang mit der Saugleitung bzw. Sogwirkung der Absaugeinrichtung 102 des Vorabscheiders 10 erläutert, muß der von den Düsen 15, 150 auf die Feststoffteilchen an der Innenwand des Filtermantels 120 einwirkende Sog stärker sein, als die nicht zuletzt von der Absaugleistung beim Kammeraustritt 181 (d. h. der Strömungsrate des gereinigten Abgas- bzw. Abluftstromes D) bedingte Haftung der Feststoffteilchen am Filtermantel 120.

Beispielsweise ist die Strömungsgeschwindigkeit von C mindestens zweimal größer als die von D und der oben als Beispiel für die Geschwindigkeit von Strom B genannte Wert von etwa 25 m/sec ist grundsätzlich auf für C brauchbar.

Der über die Leitung 133 abgezogene Schmutzgasstrom C muß aber nicht unbedingt kontinuierlich wirken, sondern kann auch periodisch bzw. pulsierend arbeiten, z. B. in Abhängigkeit vom Feststoffgehalt bzw. Verschmutzungsgrad des durch den Hauptabscheider 11 geführten Gas- bzw. Luftstromes.

Die in Fig. 2 dargestellte Draufsicht auf den Vorabscheider 10 zeigt die (in Fig. 1 nicht dargestellte) vordere Abdeckwand 29 des Gehäuses 18. Die Wand 29 kann als Stützfläche für den Filtermantel 120 dienen und hat eine von der Siebscheibe 101 überdeckte kreisförmige Öffnung, an deren Umfang die Siebscheibe 102 in der oben erläuterten Weise gleitend und dichtend anliegt. In Fig. 2 ist nur ein Absaugerarm 22 dargestellt, der über einen kammerartigen Anschluß 23 mit der Absaugleitung 104 zur Entfernung des im Vorabscheider 10 anfallenden Feststoff- bzw. Faseranteils verbunden ist.

Es können aber auch zwei oder mehr Absaugarme 22 verwendet und gegebenenfalls mit radial gestaffelten Absaugdüsenbereichen ausgebildet werden. Auch die in Fig. 2 dargestellte und im wesentlichen radiale bzw. lineare Ausbildung des Absaugerarmes 22 ist nicht kritisch, solange der Arbeitsradius der Siebscheibe abgesaugt werden kann. Dabei versteht sich, daß auch für den normalerweise nicht bevorzugten Fall einer periodischen Umkehrung der Drehbewegung der Siebscheibe 101 mit Teilumlauf (weniger als 360°) eine vollständige Absaugung der Siebscheibe 101 dadurch sichergestellt werden kann, daß sich der Absaugerarm 22 über den gesamten Durchmesser der Siebscheibe 101 erstreckt und/ oder daß eine Mehrzahl von radial verteilten Absaugerarmen verwendet wird.

Das in Fig. 3 dargestellte Fließschema erläutert den Eintritt des verschmutzten Gas- bzw. Luftstromes bei A in das erfindungsgemäße Filteraggregat 30; das Absaugen des im Vorabscheider entstehenden Faser/Luftstromes B mit der Absaugeinrichtung 33 in einen konventionellen Faserabscheider 36 beliebiger Bauart und gegebenenfalls Verarbeitung des in 36 abgetrennten Fasermaterials in einer Ballenpresse 37; die im Abscheider 36 anfallende und nur grob gereinigte Luft wird wieder in den Eingangsstrom A zurückgeführt; ferner das oben bereits erläuterte Absaugen des feststoffhaltigen Luftstromes C aus dem Hauptabscheider mit Hilfe der Absaugeinrichtung 32 und der üblichen Entstaubung bei 34, 35; und schließlich das Absaugen des von Feststoffen befreiten Gas- bzw. Luftstromes D mit Hilfe der Absaugeinrichtung 31.

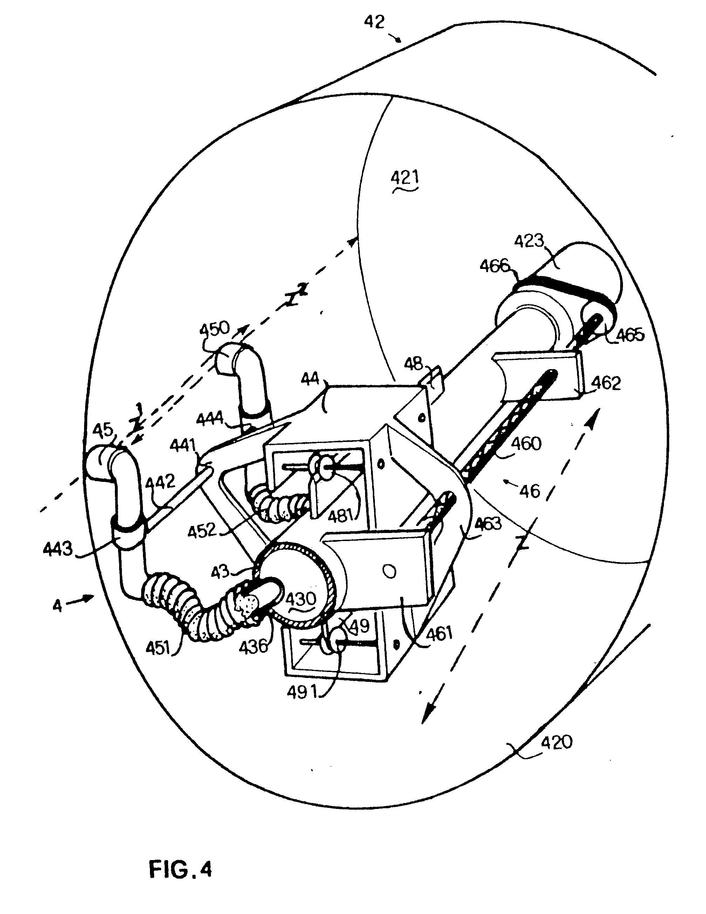

In Fig. 4 ist ein erfindungsgemäßes Filteraggregat 4 in vereinfachter perspektivischer, teilweise geschnittener bzw. abgebrochener Ansicht dargestellt. Dabei ist das strömungsseitig vordere Ende der Hohlwelle 43 und der Filtertrommel 42 abgeschnitten, so daß der Innenraum 430 der geschnittenen Hohlwelle 43 sichtbar ist und der eine der einmündenden Stutzen 436 zum Anschluß an die flexible Leitung 451 der zugehörigen Absaugdüse 45 ebenfalls noch geschnitten erscheint.

Der zylindrische Filtermantel 420 der Trommel 42 ist am hinteren Trommelende mit einer z. B. aus Blech bestehenden Wand 421 verschlossen, durch die sich der Lagerkragen 423 erstreckt, in welchem die umlaufende Hohlwelle 43 gelagert und geführt ist.

Mit der Hohlwelle 43 starr verbunden, z. B. verschweißt, sind zwei Führungsschienen 48, 49, auf welchen der Schlitten 44 mit Hilfe von Rollenpaaren (jeweils nur vordere Rolle erkennbar) 481, 491 in beiden axialen Richtungen entsprechend dem Doppelpfeil Z bewegt werden kann.

Am Haltebügel 441 des Schlittens 44 sind über ein Gestänge 442 mit zwei endseitigen Krägen 443, 444 die Absaugdüsen 45, 450 befestigt, so daß diese der der axialen Bewegung Z des Schlittens 44 entsprechend den Doppelpfeilen $Z^1$, $Z^2$ folgen und beim Umlaufen der Hohlwelle 43 durch die in radialer Richtung (über die Schienen 48, 49 und die Rollenpaare 481, 491) bewegungsstarre Verbindung des Schlittens 44 in wellenförmigen Bahnen über die Innenseite des stationären Filtermantels 420 geführt werden, so daß diese über ihre gesamte axiale Länge mit den Absaugdüsen von anhaftendem Feststoff befreit wird. Bei entsprechend großer axialer Länge des Filtermantels werden zweckmäßig mehrere Schlitten 44 vorgesehen.

Die Hin- und Herbewegung des Schlittens 44 in axialer Richtung auf der (in nicht dargestellter Weise) angetriebenen Hohlwelle 43 wird von der Einrichtung 46 erzeugt; hierzu ist die Kreuzspindel 460 drehbar in zwei Führungen 461, 462 gelagert, die ihrerseits starr mit der Hohlwelle 43 verbunden sind, z. B. durch Verschweißen oder Verschrauben.

Am hinteren Ende trägt die Kreuzspindel 460 eine Scheibe oder ein Rad 465, die bzw. das über einen endlosen Riemen 466, z. B. ein Gummiband oder ein Keilriemen, mit dem stationären Lagerkragen 423 in Eingriff steht. Beim Umlauf der angetriebenen Hohlwelle 43 und der damit verbundenen Kreuzspindellager 461, 462 wird das Rad 465 vom Riemen 466 gedreht, wobei das Übersetzungsverhältnis im wesentlichen durch den Außendurchmesser des Lagerkragens 423 und den wählbaren Durchmesser des Rades 465 bestimmt werden kann. Es versteht sich, daß bei gegebener Umlaufgeschwindigkeit der Hohlwelle 43 außer dem Übersetzungsverhältnis auch die Gewindesteigung der Kreuzspindel 460 zur Wahl der Axialbewegungsgeschwindigkeit bzw. der Oszillationsfrequenz des Schlittens 44 und damit der Absaugdüsen herangezogen werden kann. Die jeweils zweckmäßigste Oszillationsfrequenz des Schlittens 44 pro Umlauf der Hohlwelle 43 kann von mehreren Verfahrensparametern beeinflußt werden, insbesondere aber vor der pro Zeiteinheit auf der Innenseite des Filtermantels 420 abgelagerten Feststoffmenge. Diese wiederum hängt von dem Feststoffgehalt des zu filtrierenden Gasstromes bzw. davon ab, ob eine Vorfilterstufe, z. B. wie oben beschrieben, vorgesehen ist oder nicht. Die Auswahl eines für gegebene Betriebsverhältnisse optimalen Verhältnisses der Oszillationsfrequenz des Schlittens zur Umlaufgeschwindigkeit der Hohlwelle liegt aber durchaus im Rahmen des fachmännischen Wissens.

Zahlreiche Variationen der oben beschriebenen Beispiele des neuen Filteraggregates im Rahmen der Erfindung sind für den Fachmann ohne weiteres ersichtlich: so stellt etwa die praktisch horizontale Lage der Filtertrommel bzw. die entsprechende koaxiale horizontale Lage der Hohlwelle eine zweckmäßige aber keineswegs kritische Bedingung dar, d. h. Filtertrommel und Hohlwelle können vertikal oder schräg liegen.

Ferner kann es zweckmäßig sein, für ein periodisches Abstreifen von Fasern am Außenbereich der oszillierenden Absaugdüsen zu sorgen; hierzu kann die Filtertrommel mit einer oder mehreren konkaven oder konvexen und allgemein axial verlaufenden Rille(n) versehen sein oder in anderer Weise ein kurzzeitiges Abheben der oszillierenden und gegebenenfalls unter Federspannung anliegenden Absaugdüsen von der Innenseite der Filtertrommel bewirkt werden.

Ferner versteht sich, daß jeder Schlitten mehrere innenseitige Absaugdüsen tragen kann und/oder daß mehrere Schlitten mit jeweils zwei oder mehr solcher Düsen verwendet werden können. Wenn die Hohlwelle bei entsprechend großer axialer Länge der Trommel zwei oder mehr Schlitten trägt, müssen nicht alle jeweils für sich mit einer Einrichtung zur Erzeugung der axialen Oszillationsbewegung verbunden sein. Vielmehr kann man nur einen Schlitten direkt mit der Einrichtung koppeln und die anderen Schlitten durch Gestänge oder dergleichen mit dem ersten Schlitten verbinden. Vorzugsweise ist dann aber jeder Schlitten an mindestens einer Schiene bzw. an einem Teilbereich einer entsprechend durchgehenden Schiene geführt. Ebenfalls zweckmäßig ist es, insbesondere bei Verwendung von mehreren Schlitten, eine Unwucht der mit der Hohlwelle rotierenden Masse ganz oder teilweise zu kompensieren, etwa indem die von dem jeweiligen Schlitten abragenden Düsenträger radial zueinander entsprechend regelmäßig versetzt sind.

## Patentansprüche

1. Filteraggregat (1) zur Entfernung oder/und Rückgewinnung von feinteiligen Feststoffen aus einem Gasstrom (A), insbesondere aus einem Luftstrom in der Textilverarbeitung, mit einem Abscheider (11), der mit Hilfe einer Druck- oder Saugeinrichtung von innen mit dem die Feststoffe enthaltenden Gasstrom (A) beaufschlagt wird und einer Filtertrommel (12) mit stationärem zylindrischem, gasdurchlässigem Filtermantel (120) sowie einer annähernd axial angeordneten umlaufenden und mit einem Antrieb (19) verbundenen Hohlwelle (13), die in radialer Richtung drehstarr mit mindestens einer Absaugdüse (15) verbunden ist, um auf der Innenseite des Filtermantels (120) abgelagerte Feststoffe mit Hilfe einer Saugeinrichtung (32) durch die Absaugdüse (15) und den Hohlraum (130) der Hohlwelle (13) abzusaugen, dadurch gekennzeichnet, daß die mindestens eine Absaugdüse (15) mit der Hohlwelle (13) über mindestens einen Schlitten (14), der in radialer Richtung drehstarr, aber in axialer Richtung verschiebbar auf der Hohlwelle (13) gelagert ist, verbunden ist und daß eine drehstarr mit der Hohlwelle (13) verbundenen Einrichtung (16) die vom Antrieb (19) erzeugte Drehbewegung der Hohlwelle (13) in axiale Oszillationsbewegungen des mit der Hohlwelle (13) umlaufenden Schlittens (14) umsetzt, um die über eine flexible Leitung (151) mit dem Hohlraum (130) verbundene, mindestens eine Düse (15) in wellenförmiger Bahn über die Innenseite des Filtermantels (120) zu führen.

2. Filteraggregat nach Patentanspruch 1 mit einem Vorabscheider, dadurch gekennzeichnet, daß ein Vorabscheider (10) vor einer kreisförmigen Siebscheibe (101) und einer den Arbeitsradius der strömungsseitig vorderen Seite der Siebscheibe (101) im wesentlichen überdeckenden stationären Absaugeinrichtung (102) gebildet wird, wobei die Siebscheibe (102) die strömungsseitig vordere Kreisfläche (121) der Filtertrommel (12) des Abscheiders (11) abdeckt und bewegungsstarr mit der umlaufenden Hohlwelle (13) verbunden ist.

3. Filteraggregat nach einem der Patentansprüche 1—2, dadurch gekennzeichnet, daß die Einrichtung (16) eine Kreuzspindel (160) besitzt, die drehbar in zwei voneinander beabstandeten und an der Hohlwelle (13) befestigten Halterung (161, 162) gelagert ist, und wobei der Schlitten (14) starr mit einer auf der Kreuzspindel (160) in axialer Richtung beweglichen Führung (163) verbunden ist.

4. Filteraggregat nach Patentanspruch 3, dadurch gekennzeichnet, daß die Kreuzspindel (160) an einem Ende über eine Kopplung (165) mit einer stationären Abrollfläche (123) in Eingriff steht, um die Bewegung der rotierenden Hohlwelle (13) relativ zur stationären Filtertrommel (12) in eine Drehbewegung der Kreuzspindel (160) umzusetzen.

5. Filteraggregat nach einem der Patentansprüche 1—4, dadurch gekennzeichnet, daß der Schlitten (14) auf einer Schiene (164) geführt ist, die bewegungsstarr mit der Hohlwelle (13) verbunden ist und den Schlitten (14) in axialer Richtung beweglich aber in radialer Richtung praktisch drehstarr mit der Hohlwelle (13) koppelt.

6. Filteraggregat nach einem der Patentansprüche 2—5, dadurch gekennzeichnet, daß die Absaugeinrichtung (102) des Vorabscheiders (10) mit einem Sauggebläse (33) in Verbindung steht, das unabhängig vom Sauggebläse (31) zur Führung des Gasstromes durch den Abscheider (11) steuerbar ist.

7. Filteraggregat nach einem der Patentansprüche 2—6, dadurch gekennzeichnet, daß die Siebscheibe (101) praktisch eben ausgebildet ist und die Absaugeinrichtung (102) des Vorabscheiders (10) mindestens eine auf die strömungsseitig vordere Fläche der Siebscheibe (101) einwirkende Schlitzdüse besitzt.

8. Filteraggregat nach einem der Patentansprüche 1—7, dadurch gekennzeichnet, daß die Hohlwelle (13) mindestens in ihrem durch die Filtertrommel (12) sich erstreckenden Teil praktisch horizontal und koaxial angeordnet ist.

9. Filteraggregat nach einem der Patentansprüche 1—8, dadurch gekennzeichnet, daß die durch die stationäre kreisförmige Endplatte (121) des Abscheiders (11) geführte Hohlwelle (13) außerhalb der Filtertrommel (12) mit dem an der Endplatte (121) befestigten Antrieb (19) verbunden ist.

## Claims

1. Filtration system (1) for removal and/or recuperation of fine particulate solids from a gas stream (A), notably from an air stream in textile processing, comprising a separator (11) internally impinged via a blower or exhaustor by a gas stream (A) that contains the solids; a filter drum (12) provided with a stationary cylindrical and gas-pervious filter jacket (120); and an approximately axially arranged rotating hollow shaft (13) connected to a drive (19), said shaft being connected rigidly in radial direction with a least one suction nozzle (15) for sucking-off solids deposited at the inner surface of the filter jacket (120) by means of a suction device (32) through the suction nozzle (15) and the hollow space (130) of the hollow shaft (13), characterized in that the at least one suction nozzle (15) is connected to the hollow shaft (13) by means of at least one sliding device (14) which is supported on the hollow shaft (13) rigidly in radial direction but slidingly in axial direction, and that an installation (16) connected rigidly for rotation with the hollow shaft (13) transforms the rotational movement of the hollow shaft (13) caused by the drive (19) into axially oscillating movements of the sliding device (14) so that the at least one nozzle (15) connected by flexible conduit (151) with the hollow space (130) is guided along a wave-like path over the inner surface of the filter jacket (120).

2. The filtration system of claim 1 with a pre-separator, characterized in that a pre-separator (10) is formed by a circular filter disc (101) and a stationary suction device (102) essentially covering the work radius of the up-stream front face of the filter disc (101), wherein the filter disc (101) covers the circular up-stream front face (121) of the filter drum (12) of the separator (11) and is rigidly connected for movement with the rotating hollow shaft (13).

3. The filtration system according to one of claims 1—2, characterized in that the installation (16) comprises a cross-spindle (160) rotatably supported by two distanced mounting supports (161, 162) secured to the hollow shaft (13), and wherein the sliding device (14) is rigidly connected to a guide (163) which is movable on the cross-spindle (160) in axial direction.

4. The filtration system according to claim 3, characterized in that one end of the cross-spindle (160) is connected by means of a coupling (165) with a stationary surface (123) for rolling contact in order to transform the relative movement between the rotating hollow shaft (13) and the stationary filter drum (12) into a rotary movement of the cross-spindle (160).

5. The filtration system of any of claims 1—4, characterized in that the sliding device (14) is connected to a rail (164) which is rigidly connected to the hollow shaft (13) and connects the sliding device (14) in such manner to the hollow shaft (13) that the slide device (14) is displaceable in axial direction but connected for rotation practically rigidly to the hollow shaft (13).

6. The filtration system of any of claims 2—5, characterized in that the suction device (102) of the pre-separator (10) is connected to an exhaustor (33) that is controllable independently of the exhaustor (31) for passing the gas stream through the separator (11).

7. The filtration system of any of claims 2—6, characterized in that the filter disc (101) is substandially flat and that the suction device (102) of the pre-separator (10) has at least one slot nozzle acting upon the up-stream front face of the filter disc (101).

8. The filtration system of any of claims 1—7, characterized in that at least the hollow shaft (13) portion which extends through the filter drum (12) is arranged practically horizontally and coaxially.

9. The filtration system of any of claims 1—8, characterized in that the hollow shaft (13) is guided by the stationary circular end plate (121) of the separator (11) and is connected externally of the filter drum (12) to the drive (19) which in turn is secured to the end plate (121).

## Revendications

1. Ensemble de filtration (1) destiné à éliminer ou/et à récupérer des matières solides en particules fines d'un courant de gaz (A), en particulier d'un courant d'air dans un traitement textile, comprenant un séparateur (11) alimenté, à l'aide d'un dispositif de pression ou de suction, depuis l'intérieur avec le courant de gaz (A) contenant les matières solides, et un tambour filtrant (12) muni d'une chemise filtrante (120) stationnaire cylindrique et perméable au gaz ainsi qu'un arbre creux tournant (13) disposé sensiblement axialement et relié à un moyen d'entraînement (19), cet arbre creux (13) étant relié à rotation en direction radiale avec au moins une tuyère d'aspiration (15), pour aspirer des matières solides déposées sur le côté intérieur de la chemise filtrante (120) et les évacuer à travers la tuyère d'aspiration (15) et le creux (130) de l'arbre creux (13) à l'aide d'un dispositif d'aspiration (32), caractérisé en ce que ladite au moins une tuyère d'aspiration (15) est reliée à l'arbre creux (13) par l'intermédiaire d'au moins un glissoir (14) qui est monté sur cet arbre de façon à tourner avec lui tout en pouvant se déplacer en direction axiale sur lui, et en ce qu'un mécanisme (16) relié à rotation avec l'arbre creux (13) transforme la rotation de l'arbre creux (13) produite par le dispositif d'entraînement (19) en un mouvement oscillatoire du glissoir (14) tournant avec l'arbre creux (13), pour conduire ladite au moins une tuyère d'aspiration (15) reliée par une conduite flexible (151) avec le creux (130) en une trajectoire ondulée sur le côté intérieur de la chemise filtrante (120).

2. Ensemble de filtration selon la revendication 1, comprenant un pré-séparateur, caractérisé en ce qu'un pré-séparateur (10) est formé d'un disque-tamis circulaire (101) et d'un dispositif d'aspiration stationnaire (102) recouvrant essentiellement le rayon de travail de la face avant du disque-tamis (101), vu en direction du courant, le disque-tamis (101) couvrant la face circulaire avant (121), vu en direction du courant, du tambour filtrant (12) du séparateur (11) et étant rigidement relié à l'arbre creux (13) tournant.

3. Ensemble de filtration selon l'une des revendications 1—2, caractérisé en ce que le mécanisme (16) comporte une broche à filets contraires croises (160) montée rotativement dans deux attaches (161, 162) espacées fixées à l'arbre creux (13), le glissoir (14) étant rigidement relié à un guidage (163) mobile en direction axiale sur ladite broche à filets contraires croisés (160).

4. Ensemble de filtration selon la revendication 3, caractérisé en ce que la broche à filets contraires croisés (160), à l'une de ses extrémités, est en engagement par l'intermédiaire d'un accouplement (165) avec une face de déroulement stationnaire (123) pour transformer en une rotation de la broche à filets contraires croisés (160) le mouvement relatif entre l'arbre creux (13) tournant et le tambour filtrant (12) stationnaire.

5. Ensemble de filtration selon l'une des revendication 1—4, caractérisé en ce que le glissoir (14) est guidé sur un rail (164) qui est rigidement relié à l'arbre creux (13) et qui accouple le glissoir (14) à l'arbre creux (13) de façon mobile en direction axiale mais pratiquement fixe à rotation en direction radiale.

6. Ensemble de filtration selon l'une des revendications 2—5, caractérisé en ce que le dispositif d'aspiration (102) du pré-séparateur (10) est en communication avec un ventilateur aspirant (33) qui est réglable indépendemment du ventilateur aspirant (31) pour guider le courant de gaz à travers le séparateur (11).

7. Ensemble de filtration selon l'une des revendications 2—6, caractérisé en ce que le disque-tamis (101) est pratiquement plan et en ce que le dispositif d'aspiration (102) du pré-séparateur (10) possède au moins une tuyère à fente agissant sur la face avant du disque-tamis (101), vu en direction du courant.

8. Ensemble de filtration selon l'une des revendications 1—7, caractérisé en ce que l'arbre creux (13) est arrangé sensiblement horizontalement et coaxialement, au moins en ce qui concerne sa partie s'étendant à travers le tambour filtrant (12).

9. Ensemble de filtration selon l'une des revendications 1—8, caractérisé en ce que l'arbre creux (13) conduit à travers la plaque terminale circulaire (121) du séparateur (11) est relié à l'extérieur du tambour filtrant (12) avec le moyen d'entraînement (19) fixé à la plaque terminale (121).

B

## Fig. 1

1

104

102

141    120

150    15

E ← → E    19

152    121

10    151    131

13    135    14    164    136    123    132    181

A →    130    → D

103    120    161    140    163    162    165

101    16

11

110    18    12    133

C

## Fig. 2

104

23    10    29

22

102    18

103

120

101

F

33    36

B    30

37

A →    → D

C    31

Fig. 3

32

34

35

FIG.4